# EUROPEAN PATENT APPLICATION

(11) **EP 2 666 970 A1**
(43) Date of publication of application: **27.11.2013**
(21) Application number: 13168391.4
(22) Date of filing: 17.05.2013
(51) Int. Cl.: F01D 9/04, F02C 7/04

(54) **Gas turbine system having a plasma actuator flow control arrangement**

(30) Priority: 24.05.2012 US 201213480120
(71) Applicant: General Electric Company, Schenectady, NY 12345 (US)
(72) Inventor: Saraswathi, Rajesh Prabhakaran, 560066 Bangalore, Karnataka (IN); Schott, Carl Gerard, Greenville, SC 29615 (US); Powar, Shridhar Raghuvir, 560066 Banagalore, Karnataka (IN)
(74) Representative: Cleary, Fidelma

(57) **Abstract**

A gas turbine system 10 having a plasma actuator flow control arrangement including a compressor section 42 for compressing an airstream 24, wherein the compressor section includes at least one inlet guide vane 76 for controlling the airstream proximate an inlet portion 70 of the compressor section. Also included is a turbine inlet assembly 22 for ingesting the airstream to be routed to the compressor section. Further included is a plasma actuator 44 disposed within at least one of the inlet portion of the compressor section 42 and the turbine inlet assembly 22 for controllably producing an electric field to manipulate a portion of the airstream 24.

## Description

The subject matter disclosed herein relates generally to gas turbine systems, and more particularly to plasma actuators disposed within such systems.

Inlet assemblies for gas turbine systems typically include an intake portion that provides an intake path for an airstream to enter the inlet assembly and the intake portions often include conditioning features such as weather hoods or louvers. Downstream of the louvers or hoods, various filtration and airstream conditioning components may be included to treat the airstream. An inlet duct is configured to contain and route the treated airstream to a gas turbine inlet plenum, and subsequently to an inlet portion of a compressor. Routing of the airstream through the inlet assembly typically includes changes in geometry and/or rapid redirection of the airstream, thereby causing flow separation at various regions and results in an undesirable pressure drop of the airstream.

According to one aspect of the invention, a gas turbine system has a plasma actuator flow control arrangement including a compressor section for compressing an airstream, wherein the compressor section includes at least one inlet guide vane for controlling the airstream proximate an inlet portion of the compressor section. Also included is a turbine inlet assembly for ingesting the airstream to be routed to the compressor section. Further included is a plasma actuator disposed within at least one of the inlet portion of the compressor section and the turbine inlet assembly for controllably producing an electric field to manipulate a portion of the airstream.

According to another aspect of the invention, a gas turbine system has a plasma actuator flow control arrangement including a turbine inlet assembly for ingesting an airstream to be routed to a compressor section, wherein the turbine inlet assembly includes an outer wall enclosing an airstream path. Also included is a plasma actuator disposed proximate the outer wall of the turbine inlet assembly for controllably producing an electric field to manipulate a portion of the airstream.

According to yet another aspect of the invention, a gas turbine system has a plasma actuator flow control arrangement including a compressor section for compressing an airstream, wherein the compressor section includes an inlet portion. Also included is a plasma actuator disposed proximate the inlet portion of the compressor section, wherein the plasma actuator controllably produces an electric field to manipulate a portion of the airstream.

Various advantages and features will become more apparent from the following description taken in conjunction with the drawings.

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1 is a schematic illustration of a gas turbine system;
FIG. 2 is a side, elevational view of an inlet assembly of the gas turbine system;
FIG. 3 is a schematic illustration of a plasma actuator disposed within a portion of the gas turbine system; and
FIG. 4 is a side, cross-sectional view of an inlet portion of a compressor section of the gas turbine system.

The detailed description explains embodiments of the invention, together with advantages and features, by way of example with reference to the drawings.

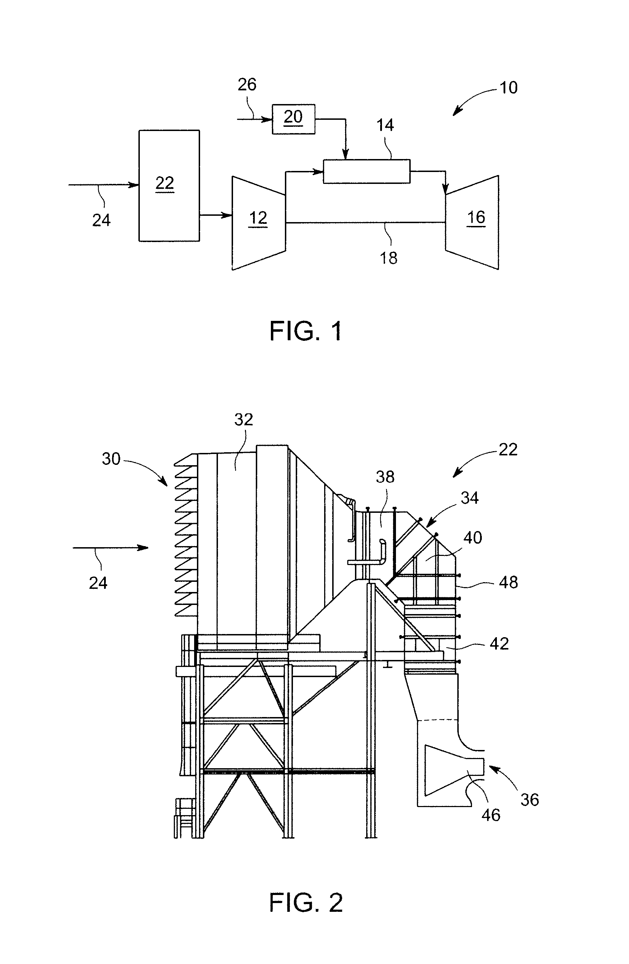

Referring to FIG. 1, a gas turbine system is schematically illustrated with reference numeral 10. The gas turbine system 10 includes a compressor 12, a combustor 14, a turbine 16, a shaft 18 and a fuel nozzle 20. The compressor 12 and the turbine 16 are coupled by the shaft 18. The shaft 18 may be a single shaft or a plurality of shaft segments coupled together to form the shaft 18. Additionally, a turbine inlet assembly 22 ingests an airstream 24 that is filtered and routed to the compressor 12.

The combustor 14 uses a combustible liquid and/or gas fuel, such as natural gas or a hydrogen rich synthetic gas, to run the gas turbine system 10. For example, fuel nozzles 20 are in fluid communication with an air supply and a fuel supply 26. The fuel nozzles 20 create an air-fuel mixture, and discharge the air-fuel mixture into the combustor 14, thereby causing a combustion that creates a hot pressurized exhaust gas. The combustor 14 directs the hot pressurized gas through a transition piece into a turbine nozzle (or "stage one nozzle"), and other stages of buckets and nozzles causing rotation of the turbine 16. Rotation of the turbine 16 causes the shaft 18 to rotate, thereby compressing the air as it flows into the compressor 12.

Referring to FIG. 2, the turbine inlet assembly 22 is illustrated in greater detail. The turbine inlet assembly 22 includes an entry portion 30 for the airstream 24, where the entry portion 30 typically comprises one or more weather hoods or louvers. The entry portion 30 provides a path for the airstream 24 to enter an inlet filter compartment 32 from ambient surroundings. In cooler operating environments, various anti-icing devices may be disposed proximate and/or downstream of the entry portion 30 to prevent ice formation and plugging within the turbine inlet assembly 22. Additionally, optional cooling components may be employed to reduce the dry bulb temperature of the airstream 24. An inlet duct 34 is configured to contain and route the airstream to an inlet plenum 36. The inlet duct 34 comprises numerous sections that may vary in orientation and geometric configuration. For example, a first duct portion 38 is shown as having a relatively horizontal orientation prior to redirection through an elbow 40 to a second duct portion 42 having a relatively vertical orientation. The inlet plenum 36 is configured to provide a relatively turbulent-free region for immediate entry of the airstream 24 to the compressor 12. The airstream 24 is subjected to yet another redirection during entry to the compressor 12 through the inlet plenum 36. The inlet plenum 36 directs the airstream 24 into a compressor inlet bellmouth 46.

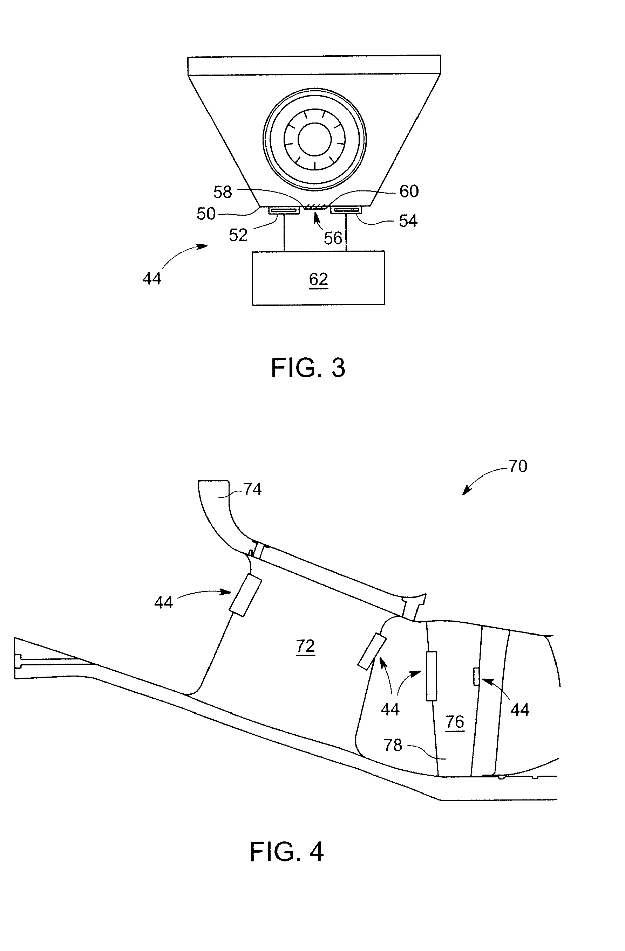

Referring to FIG. 3, in regions of redirection and/or variance in geometric configuration of the airstream 24 path, flow separation may occur, with a boundary layer forming proximate structural components of the turbine inlet assembly 22. To reduce flow separation and associated pressure drop within the turbine inlet assembly 22, a plasma actuator 44 is disposed within the turbine inlet assembly 22. Although a single plasma actuator is described, it is to be appreciated that a plurality of such plasma actuators may be employed and is dictated by the application of use. The plasma actuator 44 may be disposed at any region of the turbine inlet assembly 22 that subjects the airstream 24 to a rapid change in orientation and/or geometric configuration. Regions proximate the elbow 40, the inlet plenum 36 and the compressor inlet bellmouth 46 are examples of locations where disposal of the plasma actuator 44 may assist in reduction of flow separation exhibited at such regions. Although the previously mentioned regions are exemplary locations known to benefit from use of the plasma actuator 44, it is to be understood that the plasma actuator 44 may be located anywhere within the turbine inlet assembly 22.

The plasma actuator 44 controllably produces an electric field to manipulate a portion of the airstream 24 proximate an area typically associated with flow separation, including but not limited to an outer wall 48 (FIG. 2) of the turbine inlet assembly 22, the outer wall 48 defining and enclosing the path of the airstream 24, or on a wall 50 of the inlet plenum 36, for example. The plasma actuator 44 includes a first electrode 52, a second electrode 54 and a dielectric material 56 having a first side 58 and a second side 60, to which the first electrode 52 and the second electrode 54 are arranged in proximity to, respectively. The dielectric material 56 may be configured for conforming to a variety of geometric surfaces, including non-planar surfaces, as well as relatively planar surfaces. The first electrode 52 and the second electrode 54 are operably connected to an energy source 62. Both the first electrode 52 and the second electrode 54 comprise relatively low-diameter wires flush-mounted on the wall 50, for example, but as noted above the first electrode 52 and the second electrode 54 may be positioned at numerous locations within the turbine inlet assembly 22. The energy source 62 provides alternating current (AC) or direct current (DC) power to the first electrode 52 and the second electrode 54. Upon reaching a threshold value voltage, the airstream 24 ionizes in a region of the largest electric potential to form plasma. The plasma forms around one of the first electrode 52 and the second electrode 54 and spreads over an area tangential to the wall 50, in the form of an electric field. The plasma produces a force on the airstream 24, which in turn causes a change in the pressure distribution along whatever surface the plasma actuator 44 is disposed in proximity to. The change in pressure distribution generally reduces or substantially prevents flow separation when the plasma actuator 44 is energized by the energy source 62.

Referring now to FIG. 4, an inlet portion 70 of the compressor 12 is illustrated. The inlet portion 70 includes at least one strut 72 that provides structural support proximate an inlet casing 74 of the compressor 12. Additionally, the inlet portion 70 includes at least one, but typically a plurality of, inlet guide vanes 76 that may have variable aerodynamic vane positions. The angle of the at least one inlet guide vanes 76 may vary based on different ranges of compressor flows (i.e., startup and various unit power output settings), thereby improving operating efficiency of the compressor 12. For example, during extended turn down operation of the gas turbine system 10, the angle of the inlet guide vanes 76 may be reduced. An increased chance of flow separation of a portion of the airstream 24 is present during such a configuration of the inlet guide vanes 76, thereby creating flow disturbances in the inlet portion 70 of the compressor 12. To reduce flow separation in regions proximate the strut 72 and/or the inlet guide vanes 76, or more specifically an exterior surface 78 of the inlet guide vanes 76, the plasma actuator 44 may be disposed proximate one or both component. The plasma actuator 44 has been described in detail above and further description is not necessary. As shown, the plasma actuator 44, or a plurality of plasma actuators, may be disposed at various locations on the strut 72 and/or the inlet guide vanes 76.

Accordingly, the flow profile of the airstream 24 in regions of the turbine inlet assembly 22 and the inlet portion 70 of the compressor 12 may be better controlled, while reducing fluctuations in the airstream 24 that occur due to upstream disturbances. The overall efficiency of the gas turbine system 10 is improved by use of the plasma actuator 44, which requires a relatively low amount of power consumption with real-time control.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A gas turbine system having a plasma actuator flow control arrangement comprising:
   a compressor section for compressing an airstream, wherein the compressor section includes at least one inlet guide vane for controlling the airstream proximate an inlet portion of the compressor section;
   a turbine inlet assembly for ingesting the airstream to be routed to the compressor section; and
   a plasma actuator disposed within at least one of the inlet portion of the compressor section and the turbine inlet assembly for controllably producing an electric field to manipulate a portion of the airstream.
2. The gas turbine system of clause 1, wherein the turbine inlet assembly includes a first duct portion for routing the airstream in a first direction, a second duct portion for routing the airstream in a second direction, and an elbow for transitioning the airstream from the first duct portion to the second duct portion, wherein the plasma actuator is disposed within the elbow.
3. The gas turbine system of any preceding clause, wherein the turbine inlet assembly includes an inlet plenum disposed upstream of, and proximate to, the inlet portion of the compressor section, wherein the plasma actuator is disposed within the inlet plenum.
4. The gas turbine system of any preceding clause, wherein the inlet plenum comprises a compressor inlet bellmouth, wherein the plasma actuator is disposed proximate the compressor inlet bellmouth.
5. The gas turbine system of any preceding clause, wherein the at least one inlet guide vane comprises an exterior surface, wherein the plasma actuator is disposed proximate the exterior surface.
6. The gas turbine system of any preceding clause, wherein the plasma actuator comprises a dielectric component having a first side and a second side, a first electrode disposed proximate the first side and a second electrode disposed proximate the second side.
7. The gas turbine system of any preceding clause, wherein the first electrode and the second electrode are operably connected to at least one energy source.
8. The gas turbine system of any preceding clause, wherein the at least one energy source provides a direct current (DC) voltage to the first electrode and the second electrode.
9. The gas turbine system of any preceding clause, wherein the at least one energy source provides an alternating current (AC) to the first electrode and the second electrode.
10. A gas turbine system having a plasma actuator flow control arrangement comprising:
   a turbine inlet assembly for ingesting an airstream to be routed to a compressor section, wherein the turbine inlet assembly includes an outer wall enclosing an airstream path; and
   a plasma actuator disposed proximate the outer wall of the turbine inlet assembly for controllably producing an electric field to manipulate a portion of the airstream.
11. The gas turbine system of any preceding clause, wherein the turbine inlet assembly includes a first duct portion for routing the airstream in a first direction, a second duct portion for routing the airstream in a second direction, and an elbow for transitioning the airstream from the first duct portion to the second duct portion, wherein the plasma actuator is disposed within the elbow.
12. The gas turbine system of any preceding clause, wherein the turbine inlet assembly includes an inlet plenum disposed upstream of, and proximate to, an inlet portion of the compressor section, wherein the plasma actuator is disposed within the inlet plenum.
13. The gas turbine system of any preceding clause, wherein the plasma actuator comprises a dielectric component having a first side and a second side, a first electrode disposed proximate the first side and a second electrode disposed proximate the second side.
14. The gas turbine system of any preceding clause, wherein the first electrode and the second electrode are operably connected to at least one energy source.
15. The gas turbine system of any preceding clause, wherein the at least one energy source provides a direct current (DC) voltage to the first electrode and the second electrode.
16. The gas turbine system of any preceding clause, wherein the at least one energy source provides an alternating current (AC) to the first electrode and the second electrode.
17. A gas turbine system having a plasma actuator flow control arrangement comprising:
   a compressor section for compressing an airstream, wherein the compressor section includes an inlet portion; and
   a plasma actuator disposed proximate the inlet portion of the compressor section, wherein the plasma actuator controllably produces an electric field to manipulate a portion of the airstream.
18. The gas turbine system of any preceding clause, wherein the compressor section comprises at least one inlet guide vane having an exterior surface, wherein the plasma actuator is disposed proximate the exterior surface.
19. The gas turbine system of any preceding clause, wherein the inlet portion of the compressor section comprises a strut, wherein the plasma actuator is disposed on the strut.
20. The gas turbine system of any preceding clause, wherein the plasma actuator comprises a dielectric component having a first side and a second side, a first electrode disposed proximate the first side and a second electrode disposed proximate the second side, wherein the first electrode and the second electrode are operably connected to at least one energy source.

## Claims

1. A gas turbine system (10) having a plasma actuator flow control arrangement comprising:
a compressor section (12) for compressing an airstream (24), wherein the compressor section includes at least one inlet guide vane (76) for controlling the airstream proximate an inlet portion (70) of the compressor section;
a turbine inlet assembly (22) for ingesting the airstream to be routed to the compressor section; and
a plasma actuator (44) disposed within at least one of the inlet portion of the compressor section and the turbine inlet assembly for controllably producing an electric field to manipulate a portion of the airstream.

2. The gas turbine system (10) of claim 1, wherein the turbine inlet assembly includes a first duct portion (38) for routing the airstream in a first direction, a second duct portion (42) for routing the airstream in a second direction, and an elbow (40) for transitioning the airstream from the first duct portion to the second duct portion, wherein the plasma actuator is disposed within the elbow.

3. The gas turbine system (10) of any preceding claim, wherein the turbine inlet assembly includes an inlet plenum (36) disposed upstream of, and proximate to, the inlet portion of the compressor section, wherein the plasma actuator is disposed within the inlet plenum.

4. The gas turbine system (10) of claim 3, wherein the inlet plenum comprises a compressor inlet bellmouth (46), wherein the plasma actuator is disposed proximate the compressor inlet bellmouth.

5. The gas turbine system (10) of any preceding claim, wherein the at least one inlet guide vane comprises an exterior surface (78), wherein the plasma actuator is disposed proximate the exterior surface.

6. The gas turbine system (10) of any preceding claim, wherein the plasma actuator comprises a dielectric component (56) having a first side (58) and a second side (60), a first electrode (52) disposed proximate the first side and a second electrode (54) disposed proximate the second side.

7. The gas turbine system (10) of claim 6, wherein the first electrode and the second electrode are operably connected to at least one energy source (62).

8. The gas turbine system (10) of claim 7, wherein the at least one energy source (62) provides a direct current (DC) voltage to the first electrode and the second electrode.

9. The gas turbine system (10) of claim 7, wherein the at least one energy source provides an alternating current (AC) to the first electrode and the second electrode.

10. A gas turbine system (10) having a plasma actuator flow control arrangement comprising:
a turbine inlet assembly (22) for ingesting an airstream (24) to be routed to a compressor section (12), wherein the turbine inlet assembly includes an outer wall (48) enclosing an airstream path; and
a plasma actuator (44) disposed proximate the outer wall of the turbine inlet assembly for controllably producing an electric field to manipulate a portion of the airstream.

11. The gas turbine system of claim 10, wherein the plasma actuator comprises a dielectric component (56) having a first side (58) and a second side (60), a first electrode (52) disposed proximate the first side and a second electrode (54) disposed proximate the second side.

12. A gas turbine system (10) having a plasma actuator flow control arrangement comprising:
a compressor section (12) for compressing an airstream (24), wherein the compressor section includes an inlet portion (70); and
a plasma actuator (44) disposed proximate the inlet portion of the compressor section, wherein the plasma actuator controllably produces an electric field to manipulate a portion of the airstream.

13. The gas turbine system of claim 12, wherein the compressor section comprises at least one inlet guide vane (76) having an exterior surface (78), wherein the plasma actuator is disposed proximate the exterior surface.

14. The gas turbine system of claim 12 or claim 13, wherein the inlet portion of the compressor section comprises a strut (72), wherein the plasma actuator is disposed on the strut.

15. The gas turbine system of any of claims 12 to 14, wherein the plasma actuator comprises a dielectric component (56) having a first side (58) and a second side (60), a first electrode (52) disposed proximate the first side and a second electrode (54) disposed proximate the second side, wherein the first electrode and the second electrode are operably connected to at least one energy source (62).
